**Europäisches Patentamt**

**European Patent Office**

**Office européen des brevets**

(19)

(11) Veröffentlichungsnummer: **0 491 208 B1**

# (12) EUROPÄISCHE PATENTSCHRIFT

(45) Veröffentlichungstag der Patentschrift: **21.06.95**

(51) Int. Cl.⁶: **G01B 11/26**

(21) Anmeldenummer: **91120606.8**

(22) Anmeldetag: **29.11.91**

(54) **Verfahren und Vorrichtung zur optischen Messung eines Winkels, den Stellungen von Bauteilen, insbesondere Radstellungen an Fahrzeugen.**

(30) Priorität: **13.12.90 DE 4039881**

(43) Veröffentlichungstag der Anmeldung:
**24.06.92 Patentblatt 92/26**

(45) Bekanntmachung des Hinweises auf die
Patenterteilung:
**21.06.95 Patentblatt 95/25**

(84) Benannte Vertragsstaaten:
**DK ES FR GB IT**

(56) Entgegenhaltungen:
**DE-A- 2 915 515**
**DE-A- 3 632 806**
**GB-A- 2 023 284**

**Patent Abstracts of Japan, vol. 9, no. 327, (P-415)(2050), 21. Dezember 1985 & JP-A-60152928**

(73) Patentinhaber: **HOFMANN WERKSTATT-TECH-NIK GMBH**
**Werner-von-Siemens-Strasse 2**
**D-64319 Pfungstadt (DE)**

(72) Erfinder: **Longa, Simone**
**Via Michelangelo 10**
**I-21051 Arcisate (Varese) (IT)**
Erfinder: **Castelnuovo, Marco**
**Via Valsese 50**
**I-20152 Milano (IT)**

(74) Vertreter: **Nöth, Heinz, Dipl.-Phys. et al**
**Patentanwalt,**
**Mozartstrasse 17**
**D-80336 München (DE)**

EP 0 491 208 B1

**Beschreibung**

Die Erfindung betrifft ein Verfahren nach dem Oberbegriff des Patentanspruches 1 und eine Vorrichtung nach dem Oberbegriff des Patentanspruches 6.

Ein derartiges Verfahren und eine derartige Vorrichtung sind aus der DE-A-3,632,806 bekannt. Dabei wird die Blendeneinrichtung von einer einen Lichtsensor abdeckenden rotierenden Haube mit einem Spalt gebildet. Durch den Spalt trifft Licht von einer ortsfesten Lichtquelle und Licht von einer Lichtquelle, deren Stellung von der Größe des zu messenden Winkels abhängig ist, in zeitlichem Abstand auf den Lichtsensor auf. Dieser zeitliche Abstand wird für die Auswertung der Bestimmung des zu messenden Winkels in einer Rechnereinrichtung ausgewertet.

Aus der DE-A-2,915,515 ist eine weitere Vorrichtung zum optischen Messen von Winkeln bekannt, bei der ein Meßstrahl von einer Lichtquelle kommend entlang einem ersten Schenkel des zu vermessenden Winkels auf einen Schwingspiegel auftrifft, von dem der Strahl nacheinander auf zwei Lichtempfänger trifft, die in gleichem Winkelabstand vom zweiten Schenkel in der Winkelebene vorgesehen sind. Hierdurch erreicht man die Erfassung des zweiten Schenkels mittels zweier in der Ebene des zu messenden Winkels auf den Scheitelpunkt des Winkels gerichteten Einzelstrahlen.

Eine weitere optische Meßeinrichtung für Radstellungen ist beispielsweise aus der US-A-3,337,961 bekannt. Anstelle von optischen (schnurlosen) Meßverfahren bzw. Meßvorrichtungen, bei denen die Verbindungslinien zwischen den an Fahrzeugrädern befestigten Sensoren mit Hilfe von Lichtstrahlen gekennzeichnet werden, sind Radstellungsmeßvorrichtungen und -verfahren bekannt, bei denen unter Zuhilfenahme von Schnüren die Verbindungslinien zwischen den Sensoren kenntlich gemacht werden (z.B. US-A-3,164,910).

Weitere Meßgeräte, bei denen die von den Sensoren gelieferten Signale elektronisch, unter Zuhilfenahme von Rechnern, ausgewertet und die entsprechenden Winkel bzw. Radstellungen bestimmt werden, sind aus den US-A-4,239,389 und 4,265,537 bekannt.

Bei den Meßverfahren und Meßvorrichtungen, bei denen Schnüre verwendet werden, lassen sich zwar relativ große Winkelbereiche (± 45 ° und mehr) erfassen, jedoch können die Schnüre, welche die mechanischen Verbindungslinien zwischen den Sensoren kennzeichnen, zu Schwierigkeiten führen. Diese Schwierigkeiten können auf Schwingungen beruhen, welche die Schnüre ausführen, ferner ergeben sich Reibung und unbeabsichtigte Auslenkungen der Schnüre. Dies kann zu Hysterese und auch unter Umständen Meßfehlern führen. Diese Vorrichtungen erfordern daher eine äußerst sorgsame Arbeitsweise der Bedienungsperson. Bei den schnurlosen (optischen) Meßverfahren und Meßvorrichtungen ergeben sich zwar die aus der Mechanik der Schnüre resultierenden Schwierigkeiten, wie Hysterese, Reibungskräfte und unbeabsichtigte Auslenkung, nicht. Allerdings ist der Winkelmeßbereich äußerst beschränkt und beträgt bei bekannten Vorrichtungen maximal ± 10 °. Es müssen daher zusätzliche Sensoren auf Drehplatten oder dgl. verwendet werden, um größere Winkelbereiche, beispielsweise den maximalen Steuerausschlag der Vorderräder, zu erfassen.

Aufgabe der Erfindung ist es daher, ein Verfahren und eine Vorrichtung zur optischen Messung eines Winkels, den Stellungen von Bauteilen, insbesondere Radstellungen an Fahrzeugen, einnehmen, zu schaffen, bei denen mit hoher Genauigkeit ein großer Winkelbereich erfaßt werden kann.

Diese Aufgabe wird beim eingangs genannten Verfahren erfindungsgemäß durch die kennzeichnenden Merkmale des Patentanspruchs 1 gelöst.

Bei der eingangs genannten Vorrichtung wird die Aufgabe erfindungsgemäß durch die kennzeichnenden Merkmale des Patentanspruchs 6 gelöst.

Wie bei der aus der DE-A-3,632,806 bekannten Vorrichtung, beruht die Winkelmessung auf der in zeitlichen Abständen voneinander erfaßten Lichtstrahlen. Die zeitlichen Abstände dieser Lichtstrahlen entsprechen der Größe des jeweils zu messenden Winkels. Der zeitliche Abstand bzw. die zu messende Winkelgröße lassen sich registrieren, wobei beispielsweise der zeitliche Abstand durch eine Zählung, durch eine Längenmessung, durch Registerabstände in Speichern oder dgl. erfaßt werden können. Es handelt sich hier um registrierte Signale, deren Abstände rechnergestützt dann für die Bestimmung der Winkelgröße ausgewertet werden können.

Beim Messen der Radstellung wird, zugeordnet zu jedem Fahrzeugrad, in der Verlängerung der jeweiligen Radachse die erste Lichtquelle angeordnet. Diese sendet längs der Verlängerung der Radachse, die den ersten Schenkel des zu messenden Winkels bildet, einen Lichtstrahl aus. Dieser Lichtstrahl kann einen Referenzlichtstrahl bilden. Mithin kann die erste Lichtquelle als Referenzlichtquelle bezeichnet werden. Dieser erste Lichtstrahl bzw. Referenzlichtstrahl ist auf die sich drehende Spiegelfläche in der Blendeneinrichtung gerichtet, die ebenfalls in der Verlängerung der jeweiligen Radachse liegt und im Scheitel des zu messenden Winkels eine Blendenfunktion hat.

Ferner sind jedem Fahrzeugrad zwei zweite Lichtquellen zugeordnet, von denen eie eine Lichtquelle bezüglich der Fahrzeuglängsrichtung ihren Lichtstrahl rückwärts und die andere Lichtquelle ihren Lichtstrahl vorwärts richten.

Außerdem ist jedem Fahrzeugrad ein feststehender Spiegel zugeordnet, der bei einem jeweiligen Vorderrad von der vorwärts gerichteten Lichtquelle und bei einem jeweiligen Hinterrad von der rückwärts gerichteten Lichtquelle angestrahlt ist.

Außerdem richtet die einem jeweiligen Vorderrad zugeordnete, rückwärts gerichtete Lichtquelle ihren Lichtstrahl auf die sich drehende Spiegelfläche, welche in der Verlängerung der Radachse des Hinterrades an der gleichen Fahrzeugseite angeordnet ist, und die vorwärts gerichtete Lichtquelle am jeweiligen Hinterrad ihren Lichtstrahl auf die Spiegelfläche, welche in der Verlängerung der jeweiligen Radachse des Vorderrades an der gleichen Fahrzeugseite vorgesehen ist.

Auf diese Weise gewinnt man eine in der Horizontalebene messende Radstellungsmeßvorrichtung für ein Fahrzeug, insbesondere Kraftfahrzeug. In der Blendeneinrichtung kommt die rotierende Spiegelfläche zum Einsatz, welche mit konstanter Drehzahl umläuft. Aus einer solchen Blendeneinrichtung läßt sich in einfacher Weise ein Zeitnormal für einen Vollwinkel (360°), das praktisch beliebig unterteilt werden kann, gewinnen. Die sich drehende Spiegelfläche erzeugt einen Druchlaß für den jeweiligen Lichtstrahl der Lichtquellen in der Weise, daß immer dann, wenn dieser Durchlaßbereich in der Winkellage des jeweiligen Lichtstrahls vorhanden ist, der Lichtstrahl zu dem Lichtempfänger durchgelassen wird. Beim Lichtempfänger kommen daher die verschiedenen Lichtstrahlen in zeitlich unterschiedlichen Zeitpunkten an und werden dementsprechend in der Signalregistriereinrichtung registriert und aufgezeichnet, so daß sie dann rechnergestützt für die Winkelberechnung ausgewertet werden können.

Die erzielten Vorteile sind folgende.

Der erfaßbare Winkelbereich beträgt annähernd 360°. Er ist lediglich durch die praktisch vernachlässigbaren Blindwinkel der die Lichtstrahlen aussendenden Lichtquellen begrenzt. Die Meßauflösung läßt sich beliebig hoch einstellen, da die Winkelmessung auf einer Zeitmessung beruht, deren Zeitstandard (eine Umdrehung der Blendeneinrichtung, die bevorzugt als in ausgewählten Einfallswinkeln in Richtung des Lichtempfängers reflektierende Fläche ausgebildet ist) in beliebig kleine Inkrementwinkel unterteilt werden kann. Die Meßvorrichtung gewährleistet eine langzeitige Stabilität, da die Eichung nicht an elektronische Komponenten gebunden ist. Bei der Anwendung in Radstellungsmeßvorrichtungen erreicht man gegenüber bekannten Meßanordnungen eine Verringerung der Sensoranzahl. Es ist lediglich für das jeweilige Fahrzeugrad eine Sensoranordnung erforderlich. Diese besteht im wesentlichen aus der ersten Lichtquelle (Referenzlichtquelle), den beiden zweiten Lichtquellen, dem ortsfesten Spiegel und dem Lichtempfänger. Es können mit dieser Anordnung alle bei der Radstellungsvermessung in der horizontalen Ebene interessierenden Winkel vermessen werden. Ferner ist es möglich, große Radausschläge, beispielsweise den maximalen Steuerausschlagwinkel eines jeden Rades, zu messen, ohne daß hierzu zusätzliche Drehplatten mit zusätzlichen Sensoren erforderlich sind. Darüber hinaus ist es möglich, die Radbasis (Abstand der Radachsen in Längsrichtung des Fahrzeuges) und den Radversatz nicht nur in Winkelmaßen, sondern in Längenmaßen direkt zu messen, ohne daß die Bedienungsperson Daten aus einer Datenbasis abrufen und speziell eingeben muß. Ferner kann der Radabstand quer zur Fahrtrichtung direkt durch Erfassen der Radgröße gemessen werden.

Anhand der Figuren wird an Ausführungsbeispielen die Erfindung noch näher erläutert. Es zeigt:

Fig. 1    in perspektivischer Darstellung schematisch den Aufbau einer optischen Winkelmeßvorrichtung, die ein Ausführungsbeispiel der Erfindung ist;

Fig. 2    in perspektivischer Darstellung schematisch den Aufbau einer weiteren optischen Winkelmeßvorrichtung, die ein zweites Ausführungsbeispiel der Erfindung ist.

Fig. 3    elektrische Gebersignale, welche von einem in den Ausführungsbeispielen der Fig. 1 und 2 zur Anwendung ankommenden Lichtempfänger abgegeben werden;

Fig. 4    ein Blockschaltbild für eine Auswerteeinrichtung der vom Lichtempfänger abgegebenen Signale und zur Erzeugung von Lichtstrahlen, die für die Winkelmessung bei den in den Fig. 1 und 2 dargestellten Vorrichtungen erforderlich sind;

Fig. 5    ein Ausführungsbeispiel für eine Sensoreinrichtung, welche bei einer Radstellungsmeßvorrichtung, die nach einem Ausführungsbeispiel der Erfindung arbeitet, zum Einsatz kommen kann;

Fig. 6    eine Draufsicht auf die in Fig. 5 gezeigte Einrichtung;

Fig. 7    ein Ausführungsbeispiel für eine Radstellungsmeßvorrichtung, welche nach einem Ausführungsbeispiel der Erfindung arbeitet; und

Fig. 8    eine schematische Darstellung der mit der Anordnung nach Fig. 7 meßbaren Winkel und Größen;

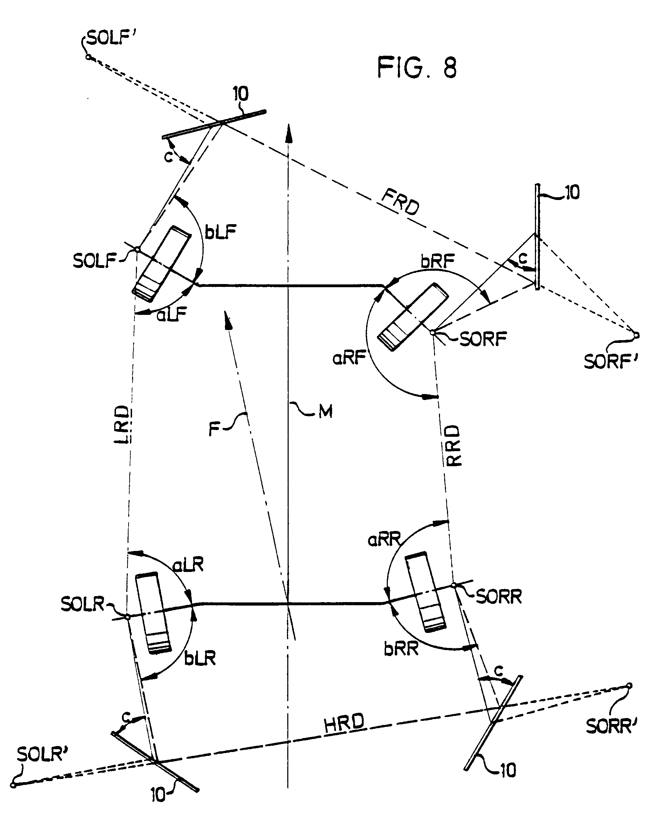

Fig. 9    eine schematische Darstellung von bestimmten Abmessungen und Winkeln, welche aus den

EP 0 491 208 B1

gemessenen Winkeln der Fig. 8 berechnet werden können;

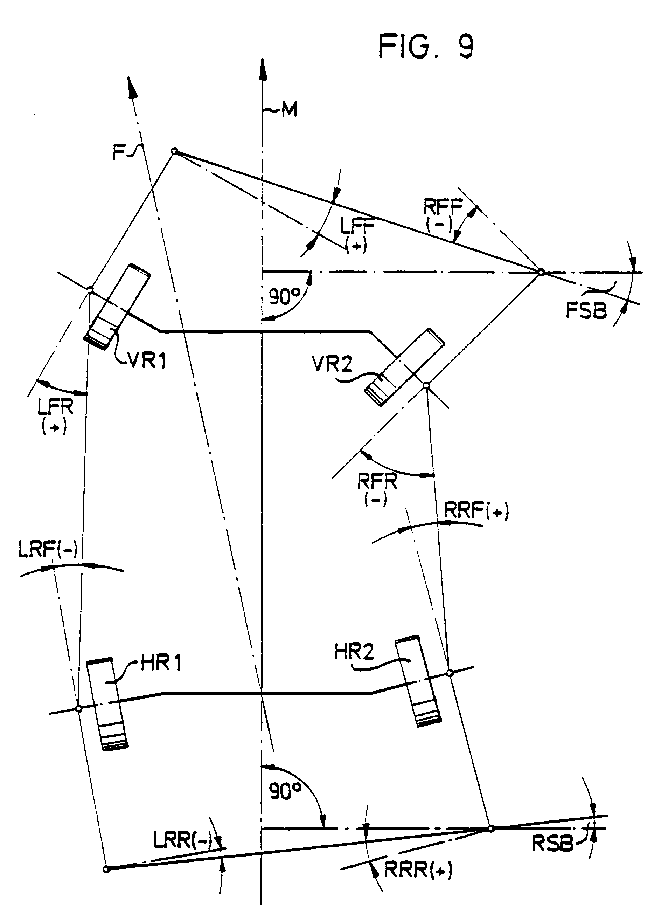

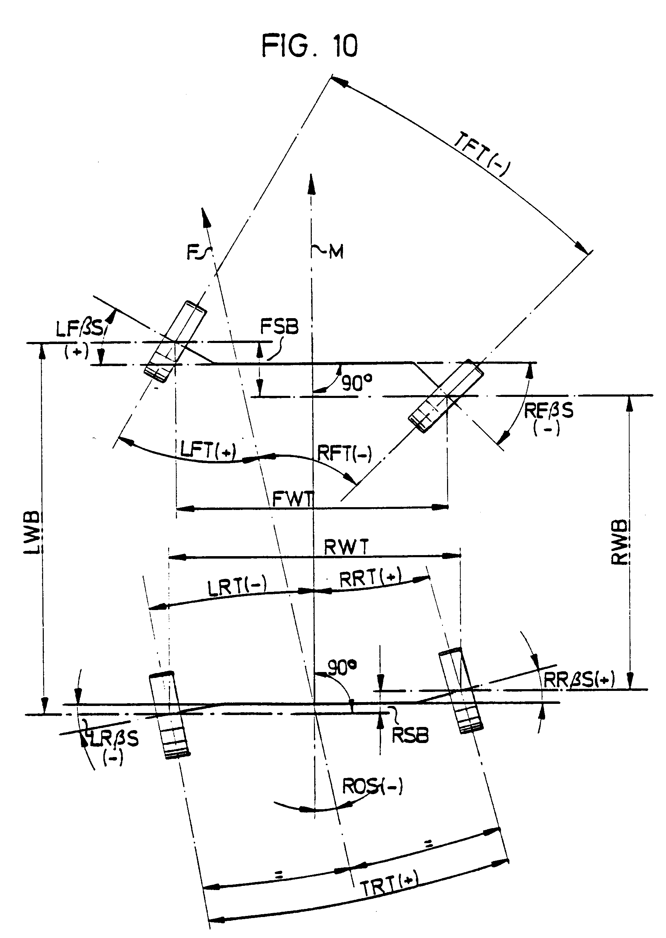

Fig. 10    eine schematische Darstellung der Radstellungswinkel, die aus den gemäß Fig. 9 gewonnenen Abmessungen und Winkeln ohne Zuhilfenahme eines äußeren Bezugssystems bestimmt werden können;

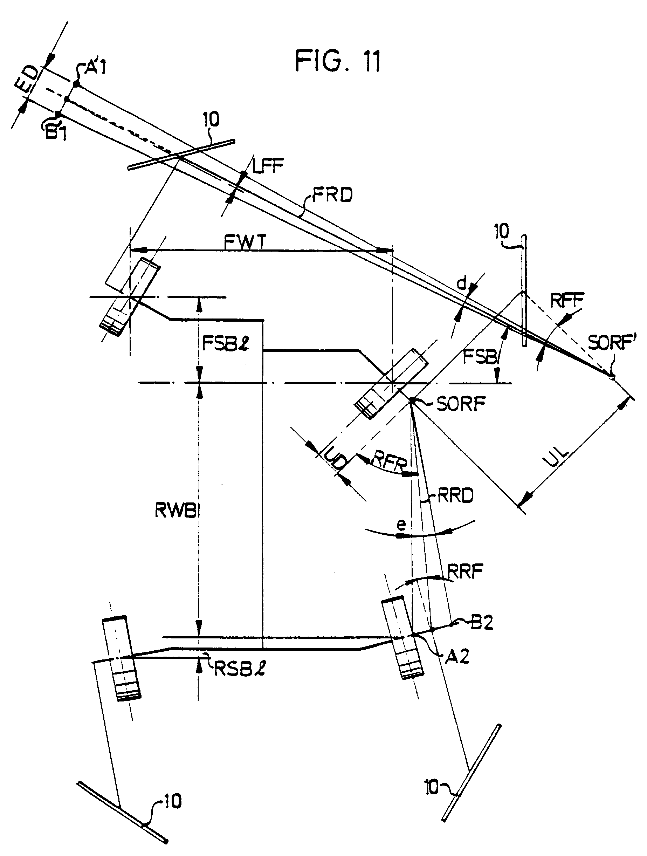

Fig. 11    eine schematische Darstellung der Radstellungsvorrichtung zur Erläuterung der Messung des Radversatzes in metrischen Einheiten unter Anwendung eines Ausführungsbeispiels der Erfindung.

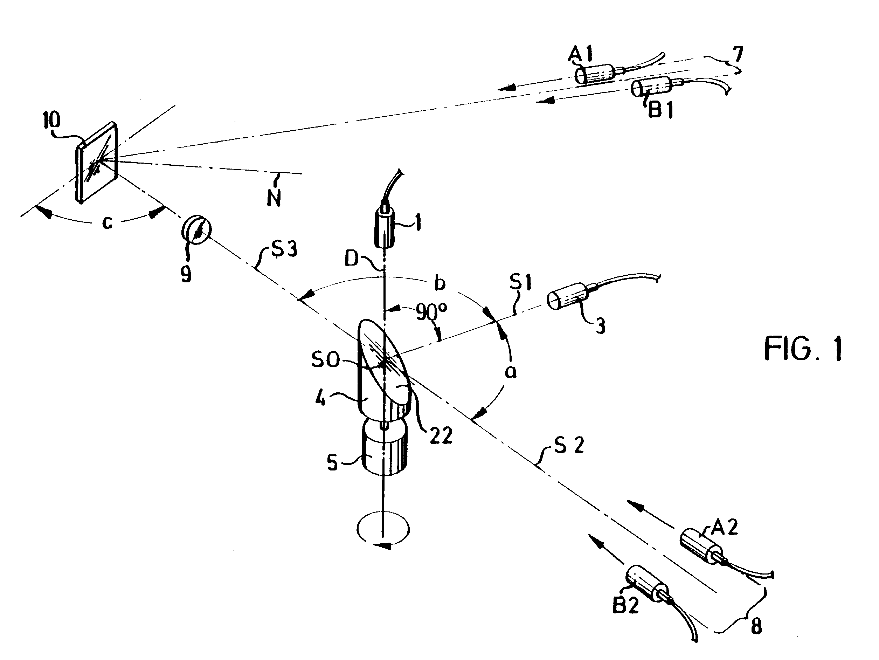

In der Fig. 1 ist schematisch eine Vorrichtung zur optischen Messung eines Winkels, die ein Aufführungsbeispiel der Erfindung ist, dargestellt. Die dargestellte Vorrichtung dient zur Messung zweier Winkel a und b, die in einer horizontalen oder auch in einer vertikalen Ebene bzw. in einer dazwischenliegenden, schräg liegenden Ebene sich befinden können.

Die Vorrichtung enthält eine erste Lichtstrahlquelle 3, welche entlang eines ersten Schenkels S1 des Winkels a bzw. Winkels b einen Lichtstrahl aussendet. Dieser Lichtstrahl bildet einen Referenzlichtstrahl, weshalb die Lichtstrahlquelle 3 auch als Referenzemitter wirkt. Im Scheitelpunkt SO des Winkels a bzw. b ist eine Blendeneinrichtung vorgesehen, die beim dargestellten Ausführungsbeispiel einen Drehspiegel 4 aufweist. Der Drehspiegel 4 wird mit Hilfe eines Motors 5, der ein Gleichstrommotor oder Schrittmotor oder dgl. sein kann, mit konstanter Drehzahl angetrieben. Der Scheitelpunkt SO befindet sich auf einer reflektierenden Fläche 22 des Drehspiegels 4.

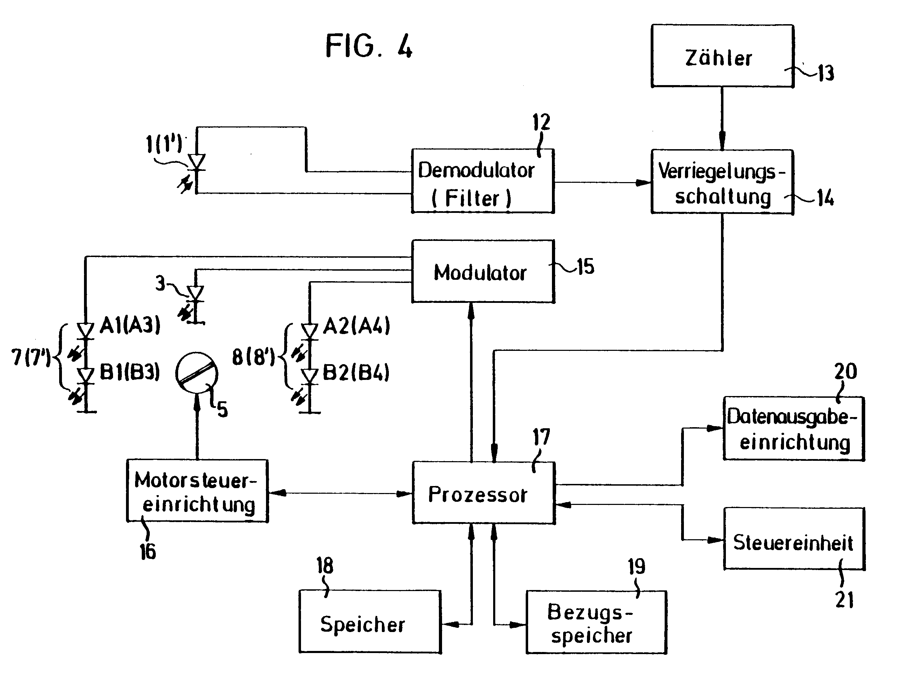

Der Drehspiegel 4 bzw. seine reflektierende Fläche 22 wird um eine Drehachse D von dem Motor 5 mit konstanter Drehzahl gedreht. Die reflektierende Fläche 22 ist gegenüber dieser Drehachse geneigt angeordnet und hat in bevorzugter Weise gegenüber dieser Drehachse D einen Winkel von 45° (Fig. 4). Der Scheitelpunkt SO des Winkels a bzw. Winkels b liegt in der Drehachse D der reflektierenden Fläche 22. Wie insbesondere aus den Figuren 1 bis 4 hervorgeht, verläuft der entlang dem Schenkel S1 ausgerichtete Referenzstrahl der Lichtstrahlquelle 3 im rechten Winkel zur Drehachse D und trifft im Scheitelpunkt SO auf die reflektierende Fläche 22 des Drehspiegels 4 auf. Die Drehachse D erstreckt sich im rechten Winkel zu der Ebene, in welcher der zu messende Winkel a bzw. b liegt.

Entlang dem anderen Schenkel S2 des zu messenden Winkels a wird von einer zweiten Lichtstrahlquelle 8 ein Lichtstrahl auf den Scheitelpunkt SO auf der reflektierenden Fläche 22 ausgesendet. Beim dargestellten Ausführungsbeispiel besteht die zweite Lichtstrahlquelle 8 aus zwei Emittern A2, B2, die auf den Scheitelpunkt SO des zu messenden Winkels a gerichtet sind.

Zur Messung des Winkels b ist ein von einer anderen zweiten Lichtstrahlquelle 7 ausgesendeter Lichtstrahl entlang dem Schenkel S3 des Winkels b auf den Scheitelpunkt SO gerichtet. Beim dargestellten Ausführungsbeispiel wird der Lichtstrahl von zwei Emittern A1, B1 erzeugt. Die Lichtstrahlen der beiden Emitter A1 und B1 werden auf einen ortsfesten Spiegel 10 gerichtet und von dort in Richtung auf den Scheitel SO des zu messenden Winkels b entlang dem Schenkel S3 reflektiert. Im Strahlengang des Lichtstrahles entlang dem Schenkel S3 kann ein Polarisator 9 angeordnet sein.

Es ist auch möglich, daß die zweite Lichtstrahlquelle 7, welche aus den beiden Emittern A1 und B1 besteht, direkt entlang dem Schenkel S3 Lichtstrahlen auf den Scheitelpunkt SO, der auf der reflektierenden Fläche 2 sich befindet, aussendet.

In der Verlängerung der Drehachse D des Drehspiegels 4 befindet sich ein Lichtempfänger 1. Der Lichtempfänger 1 empfängt das von der reflektierenden Fläche 22 reflektierte Licht. Die reflektierende Fläche 22 dreht sich fortlaufend jeweils um einen Vollwinkel (360°) mit konstanter Umlaufgeschwindigdigkeit. Hierbei nimmt die reflektierende Fläche 22 für die längs der Schenkel S1 und S2 bzw. S3 ausgerichteten Lichtstrahlen jeweils einmal pro Vollwinkeldurchlauf eine Stellung ein, bei welcher der jeweilige Lichtstrahl in Richtung auf den Lichtempfänger 1 reflektiert wird. Der zeitliche Unterschied zwischen der Reflexion des Lichtstrahles entlang dem Schenkel S1 und der Reflexion des Lichtstrahles entlang dem Schenkel S2 bzw. S3 in Richtung auf den Lichtempfänger 1 hängt von der Größe des zu messenden Winkels a bzw. b sowie von der bekannten Drehzahl des Drehspiegels 4 ab. Es ist daher möglich, durch Erfassung dieser Zeitdifferenz die Größe des Winkels a bzw. b zu bestimmen.

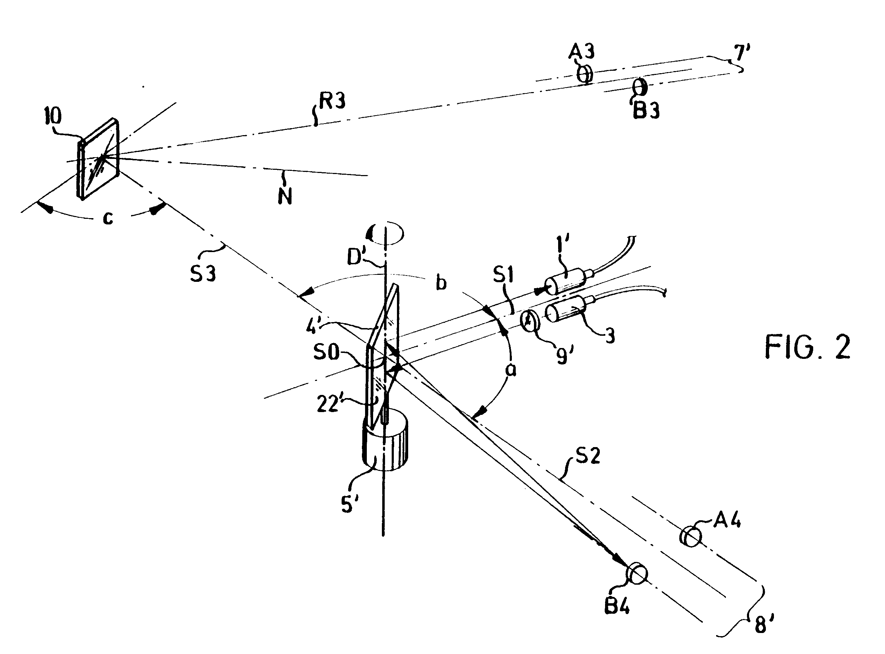

In der Fig. 2 ist ein weiteres Ausführungsbeispiel einer optischen Winkelmeßvorrichtung dargestellt. Bei dieser Winkelmeßvorrichtung ist in Abänderung zum Ausführungsbeispiel der Fig. 1 ein Lichtempfänger 1' parallel zum ersten Schenkel S1 bzw. parallel zum von der ersten Lichtstrahlquelle 3 ausgesendeten Referenzstrahl ausgerichtet. Ein Drehspiegel 4' besitzt ebenfalls eine sich drehende reflektierende Fläche 22', in welcher der Scheitelpunkt SO des zu messenden Winkels a bzw. b liegt. Die reflektierende Fläche 22' erstreckt sich jedoch im Unterschied zum Ausführungsbeispiel der Fig. 1 senkrecht zur Ebene, in welcher der zu messende Winkel a bzw. b liegt. Ferner liegt eine Drehachse D' des Drehspiegels 4' in der reflektierenden Fläche 22'. Der Drehspiegel 4' wird ebenfalls von einem Motor 5' angetrieben.

Während beim Ausführungsbeispiel der Fig. 1 für die zweiten Lichtstrahlquellen 7 und 8 Lichtstrahlen aussendende Emitter A1, B1 bzw. A2, B2 vorgesehen sind, werden bei den zweiten Lichtstrahlquellen 7' und 8' des Ausführungsbeispiels der Fig. 2 Reflektoren A3, B3 bzw. A4, B4 verwendet. Diese Reflektoeren reflektieren den vom Drehspiegel 4' reflektierten und von der ersten Lichtstrahlquelle 3 ausgesendeten Lichtstrahl.

Für die Messung der Winkel a bzw. b arbeitet die in der Fig. 2 dargestellte Winkelmeßvorrichtung wie folgt.

Der von der ersten Lichtstrahlquelle 3 entlang dem Schenkel S1 ausgesendete Lichtstrahl wird gegebenenfalls durch ein Linsensystem 9' fokussiert und/oder moduliert. Dieser Lichtstrahl ist auf den Drehspiegel 4' gerichtet. Wenn die reflektierende Fläche 22' während der Umdrehung des Drehspiegels sich bezüglich des ersten Schenkels S1 in Reflexionsstellung befindet, d. h. wenn der Schenkel S1 senkrecht auf der reflektierenden Fläche 22' steht, wird der ausgesendete Lichtstrahl entlang dem Schenkel S1 zurückreflektiert und trifft auf den Lichtempfänger 1'. Während der weiteren Drehung des Drehspiegels 4' kommt die reflektierende Fläche 22' in eine Stellung, in welcher der von der ersten Lichtquelle 3 ausgesendete Lichtstrahl in Richtung auf den Reflektor A4 der zweiten Lichtstrahlquelle 8' trifft. Von dort wird der Lichtstrahl auf die reflektierende Fläche 22' zurückreflektiert und von dort entlang dem ersten Schenkel S1 auf den Lichtempfänger 1' gerichtet. Bei der Weiterdrehung des Drehspiegels 4' wird der von der ersten Lichtstrahlquelle 3 ausgesendete Lichtstrahl über die reflektierende Fläche 22' auf den Reflektor B4 abgelenkt und von dort zurückreflektiert und, wie schon beschrieben, zum Lichtempfänger 1' weitergeleitet. In der gleichen Weise wie beim ersten Ausführungsbeispiel werden vom Lichtempfänger 1' zu unterschiedlichen Zeitpunkten die reflektierten Lichtstrahlen empfangen. Anstelle der beiden Reflektoren A4 und B4 der zweiten Lichtstrahlquelle 8' kann auch nur ein Reflektor vorgesehen sein, der im zweiten Schenkel S2 des zu messenden Winkels a angeordnet ist.

In gleicher Weise wird der von der ersten Lichtstrahlquelle 3 ausgesendete Lichtstrahl in den entsprechenden Reflexionsstellungen von den Reflektoren A3 und B3 der zweiten Lichtstrahlquelle 7' über den feststehenden Spiegel 10 reflektiert. Für die zweite Lichtstrahlquelle 7' kann ebenfalls nur ein Reflektor in der Richtung R3 angeordnet sein. R3 hat gegenüber der Flächennormalen N des feststehenden Spiegels 10 den gleichen Winkel wie der zweite Schenkel S3 des zu messenden Winkels b.

In der gleichen Weise wie beim Ausführungsbeispiel der Fig. 1 ist es mit dem in der Fig. 2 dargestellten Ausführungsbeispiel möglich, durch Erfassung der Zeitdifferenz zwischen den vom Lichtempfänger 1' empfangenen Lichtstrahlen die Größe des Winkels a bzw. b zu bestimmen.

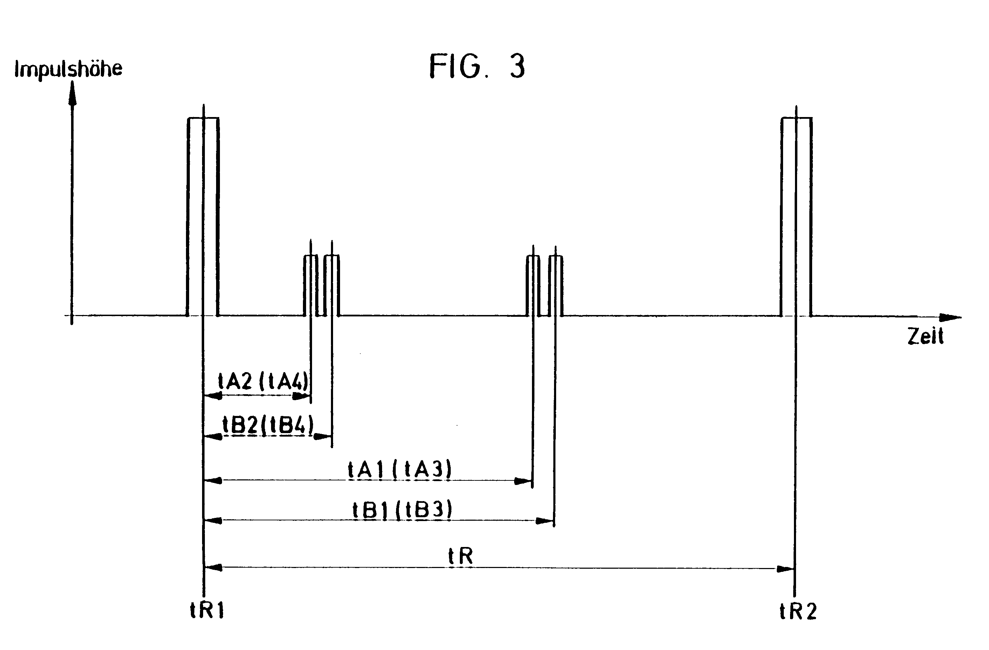

Anhand der Figuren 3 und 4 wird dies näher erläutert.

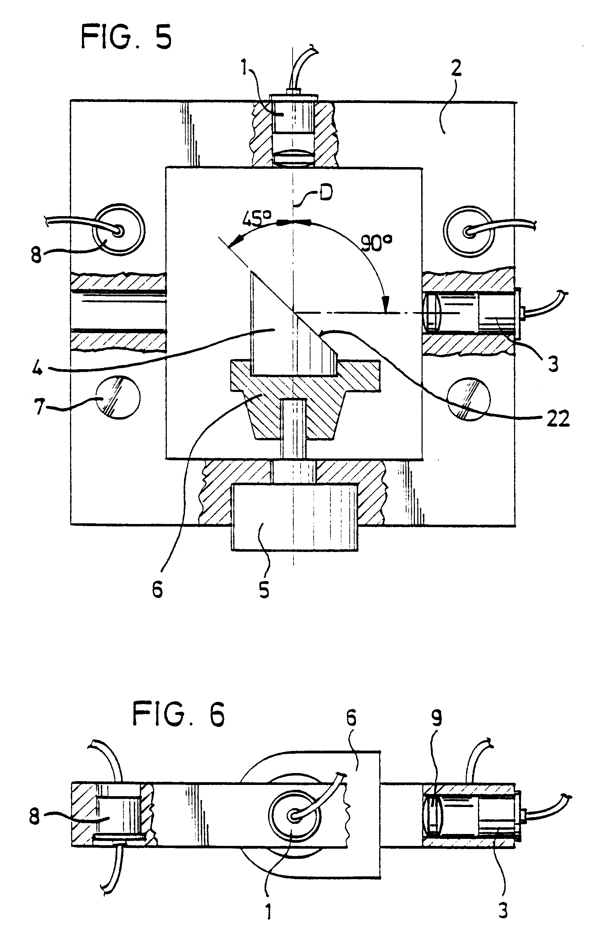

Immer dann, wenn die Einfalls- und Ausfallswinkelebene senkrecht auf der reflektierenden Fläche in Fig. 1 stehen, wird ein jeweiliger Strahl längs den Winkelschenkeln S1, S2 bzw. S3 in Richtung auf den Lichtempfänger 1 reflektiert. Beim zweiten Ausführungsbeispiel der Fig. 2 werden vom Lichtempfänger 1' immer dann reflektierte Strahlen empfangen, wenn die Flächennormale der reflektierenden Fläche 22' die Winkelhalbierende des jeweiligen Winkels zwischen dem Referenzschenkel S1 und den jeweiligen Reflektoren A3, B3, A4, B4 bildet. In der Fig. 5 ist die Stellung des Drehspiegels 4 für den Fall dargestellt, daß der von der ersten Lichtstrahlquelle 3 ausgesendete Referenzstrahl zum Lichtempfänger 1 1 reflektiert wird. In Abhängigkeit von dem empfangenen Lichtstrahl liefert der Lichtempfänger 1 ein elektrisches Ausgangssignal in Impulsform. In der Fig. 3 ist zum Zeitpunkt tR1 ein derartiges impulsförmiges Ausgangssignal dargestellt. In der Fig. 2 wird zum Zeitpunkt tR1 der Lichtstrahl entlang dem Referenzschenkel S1 zurückreflektiert. Wenn der Drehspiegel 4 bzw. 4' und die reflektierende Fläche 22 bzw. 22' bei der anschließenden Drehung einen Vollwinkel (360°) durchlaufen hat, ergibt sich die gleiche Positionierung des Drehspiegels gegenüber der ersten Lichtstrahlquelle 3 und dem Lichtempfänger 1, so daß wiederum ein Referenzstrahl auf den Lichtempfänger 1 zu reflektiert wird und ein weiteres Ausgangssignal vom Lichtempfänger 1 erzeugt wird. Dieses impulsförmige Ausgangssignal ist in der Fig. 3 zum Zeitpunkt tR2 dargestellt. Der zeitliche Unterschied zwischen den beiden Impulsen zu den Zeitpunkten tR1 und tR2 beträgt tR. Dieser zeitliche Unterschied tR (Zeitstandard) entspricht einem Vollwinkel (360°).

Wenn der Drehspiegel seine jeweiligen reflektierenden Stellungen, in denen er die von den zur zweiten Lichtstrahlquelle 8 gehörigen Emittern ausgesendeten Strahlungen zum Lichtempfänger 1 bzw. 1' reflektiert, einnimmt, werden die in Zeitabständen tA2 bzw. tA4 und tB2 bzw. tB4 zum Zeitpunkt tR1 erzeugten Impulse als Ausgangssignale vom Lichtempfänger 1 bzw. 1' geliefert (Fig. 3). Ferner werden in Zeitabständen tA1 bzw. tA3 und tB1 bzw. tB3 zum Zeitpunkt tR1 Impulse als Ausgangssignale vom Lichtempfänger 1 bzw. 1' erzeugt, wenn der Drehspiegel 4 bzw. 4' und seine reflektierende Fläche 22 bzw. 22' die entsprechenden Reflexionsstellungen einnehmen. Da die Zeitunterschiede tA2 bzw. tA4 und tB2 bzw. tB4 sowie tA1 bzw. tA3 und tB1 bzw. tB3 der Winkelgröße des Winkels a bzw. b entsprechen, lassen sich diese Winkelgrößen für das Ausführungsbeispiel in Fig. 1 gemäß folgender Beziehungen ermitteln:

$$a = \frac{(tA2 + tB2)/2}{tR} \times 360°$$

$$b = \frac{(tA1 + tB1)/2}{tR} \times 360°$$

Für das Ausführungsbeispiel in Fig. 2 ergeben sich folgende Beziehungen:

$$a = \frac{(tA4 + tB4)/2}{tR} \times 720°$$

$$b = 360° - \frac{(tA3 + tB3)/2}{tR} \times 720°$$

Wie aus Fig. 4 zu ersehen ist, können die von den Lichtstrahlquellen 3, 7, 7' und 8, 8' ausgesendeten Lichtstrahlen in geeigneter Weise mit Hilfe eines Modulators 15 moduliert sein. Hierzu können geeignete Polarisatoren, wie beispielsweise der Polarisator 9 (Fig. 1, 2), in jedem der Strahlengänge vorgesehen sein. Es ist jedoch auch möglich, geeignete Filter und dgl. vorzusehen. Auf diese Weise wird vermieden, daß aus der Umgebung störende Strahlung vom Lichtempfänger 1 bzw. 1' weitergeleitet wird. Es ist daher an den Ausgang des Lichtempfängers 1 bzw. 1' ein entsprechender Demodulator 12, beispielsweise ein Filter, angeschlossen, wie sich aus Fig. 4 ergibt.

An den Ausgang des Demodulators 12 ist eine Verriegelungsschaltung 14 angeschlossen, die zum Zeitpunkt eines jeweiligen, in der Fig. 3 dargestellten Impulses einen Zählwert, der von einem Zähler 13 geliefert wird, festhält und zur Speicherung über einen Prozessor 17 einem Speicher 18 weiterleitet.

Die im Speicher 18 abgelegten Daten, welche den Zeitdifferenzen tR, tA2 (tA4), tB2 (tB4), tA1 (tA3) und tB1 (tB3) entsprechen, werden gemäß den oben angegebenen Gleichungen für die Berechnung der Winkel a und b im Prozessor 17 ausgewertet. Dieser Vorgang wiederholt sich mit jeder Umdrehung des Drehspiegels 4 bzw. 4', wobei die Drehung des Drehspiegels gesteuert wird von einer Motorsteuereinrichtung 16, welche mit dem Prozessor 17 verbunden ist. Die Arbeitsweise des Prozessors 17 wird von einer Steuereinheit 21 gesteuert.

Mit dem Prozessor 17 ist ferner ein Bezugsspeicher 19 verbunden. Dieser kann beispielsweise Mittelwerte vorher errechneter Winkelwerte enthalten. Durch fortlaufende Mittelwertbildung kann eine möglichst genaue Winkelberechnung bei mehreren aufeinanderfolgenden Zyklen erreicht werden. Die ermittelten Winkelwerte werden dann vom Prozessor 17 einer Datenausgabeeinrichtung 20 zugeleitet, aus welcher die berechneten Winkelgrößen entnommen werden können.

In den Figuren 5 und 6 ist ein Ausführungseispiel für eine Vorrichtung zur optischen Winkelmessung, insbesondere zur Anwendung beim Messen von Radstellungen an Fahrzeugen, insbesondere Kraftfahrzeugen, gezeigt. Die in den Figuren 5 und 6 dargestellte Vorrichtung bildet eine Sensoreinheit, die einem jeweiligen Kraftfahrzeugrad zugeordnet werden kann, wie im einzelnen noch erläutert wird.

Die in den Figuren 5 und 6 dargestellte Sensoreinheit besitzt als Referenzstrahlquelle die erste Lichtstrahlquelle 3 zur Aussendung des Referenzstrahles entlang dem Referenzschenkel S1 des zu messenden Winkels a bzw. b. Ferner weist die Sensoreinheit den Drehspiegel 4 auf, der in einem Drehsupport 6 gelagert ist. Der Drehsupport 6 wird vom Motor 5, der ein Gleichstrommotor, Schrittmotor oder dgl. sein kann, mit konstanter Drehzahl angetrieben. In der Drehachse D ist der Lichtempfänger 1 vorgesehen. Die Licht empfangende Fläche des Lichtempfängers 1 ist auf die reflektierende Fläche 22 des Drehspiegels 4 gerichtet. Wenn die reflektierende Fläche 22 in der in der Fig. 5 dargestellten Stellung gegenüber der Lichtstrahlquelle 3 angeordnet ist, d. h. wenn Einfalls- und Ausfallswinkelebene senkrecht auf der reflektierenden Fläche 22 stehen und ferner das Reflexionsgesetz für den Lichtempfänger 1 und die Lichtstrahlquelle 3 erfüllt sind, wird der von der Lichtstrahlquelle 3 ausgesendete Referenzstrahl auf den Lichtempfänger 1 reflektiert. Beim dargestellten Ausführungsbeispiel schließen der einfallende Referenzstrahl und der reflektierte Referenzstrahl einen Winkel von 90° ein. Das heißt, der Referenzstrahl wird im Winkel von 90° gegenüber der Drehachse D auf die reflektierende Fläche 22 des Drehspiegels 4 gerichtet. Die gleiche Anordnung hat man für die anderen Lichtstrahlquellen, wenn deren Lichtstrahlen, wie in Fig. 1 dargestellt ist, in Richtung auf den Lichtempfänger 1 zu reflektiert werden.

Die zweiten Lichtstrahlquellen 7 und 8 sind beim dargestellten Ausführungsbeispiel der Figuren 5 und 6 an einem rahmenförmigen Support 2 zusammen mit dem Lichtempfänger 1 und der Lichtstrahlquelle 3 gelagert. Die Anordnung dieser zweiten Lichtstrahlquellen 7 und 8 ist in der Weise vorgesehen, daß die beiden zur Lichtstrahlquelle 8 gehörigen Emitter A2, B2 ihre Lichtstrahlen in Vorwärtsrichtung aussenden und die zur anderen zweiten Lichtstrahlquelle 7 gehörigen Emitter A1 und B1 ihre Lichtstrahlen in Rückwärtsrichtung aussenden.

Die in Fig. 2 dargestellte Anordnung der Lichtquelle 3 des Lichtempfängers 1' des Drehspiegels 4' und der Reflektoren kann in einem dem rahmenförmigen Support 2 entsprechenden Support vorgesehen sein.

Die von den zweiten Lichtstrahlquellen 7 bzw. 8 ausgesendeten Lichtstrahlen treffen auf Drehspiegel von Sensoreinrichtungen, die den anderen Kraftfahrzeugrädern des Kraftfahrzeuges zugeordnet sind, so daß entsprechende Winkel zur Bestimmung der Radstellungen gemäß dem anhand der Figuren 1, 2 und 3 erläuterten Verfahren berechnet werden.

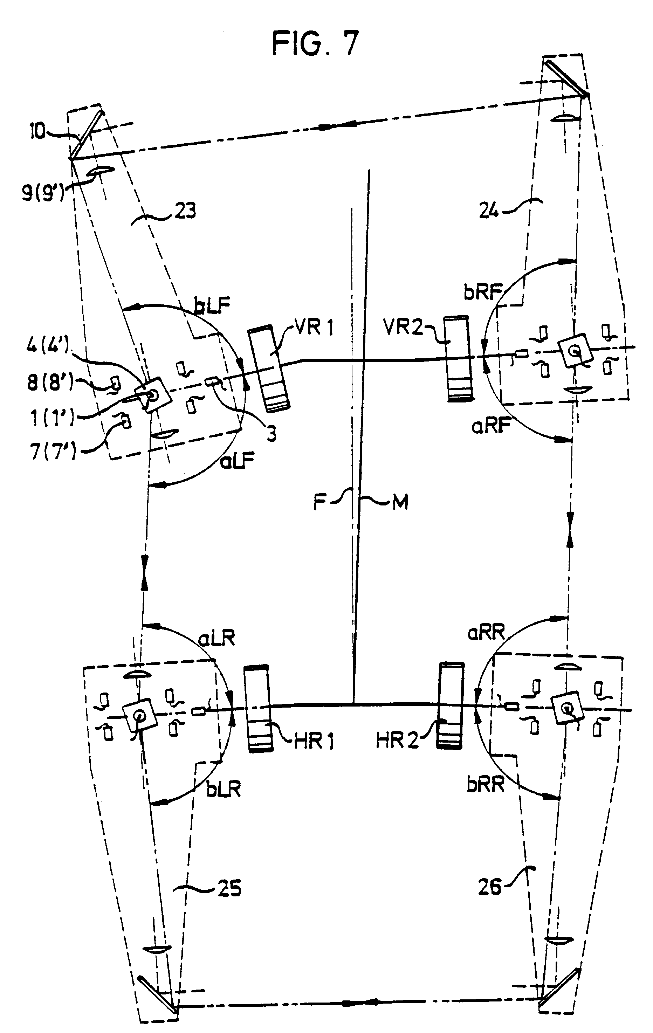

Hierzu sind, wie aus Fig. 7 zu ersehen ist, für jede einem Kraftfahrzeugrad VR1, VR2 (Vorderräder) bzw. HR1, HR2 (Hinterräder) zugeordnete Sensoreinrichtung jeweils der feststehende Spiegel 10 vorgesehen. Bei den Baueinheiten 23 und 24 bildenden Sensoreinrichtungen für die Vorderräder VR1 und VR2 sind die feststehenden Spiegel 10, in Längsrichtung des Kraftfahrzeuges gesehen, vor den Vorderachsen der beiden Vorderräder VR1, VR2 angeordnet. Die beiden von den Emittern der vorwärts gerichteten zweiten Lichtstrahlquelle ausgesendeten Lichtstrahlen bilden einen Winkel und treffen auf den feststehenden Spiegel 10. Die Winkelhalbierende dieses Winkels in der horizontalen Ebene nimmt gegenüber der Flächennormalen N der reflektierenden Oberfläche des feststehenden Spiegels 10 einen Winkel von 45° ein. Diese Winkelgröße ist beispielsweise gleich der Größe des Winkels c in Fig. 1.

Die Fig. 7 zeigt eine Anordnung optischer Winkelmeßvorrichtungen zur Bildung einer Radstellungsmeßvorrichtung bei Kraftfahrzeugen. Jedem Fahrzeugrad, nämlich den beiden Vorderrädern VR1 und VR2 sowie den beiden Hinterrädern HR1 und HR2 ist jeweils eine eine Sensoreinheit enthaltende Baueinheit 23, 24, 25, 26 zugeordnet. Jede Baueinheit ist so am Kraftfahrzeugrad befestigt, daß die Lichtstrahlquelle 3 (Referenzemitter) in der Radachse liegt und der von dieser Lichtstrahlquelle ausgesendete Lichtstrahl mit der Verlängerung der Radachse (entspricht Schenkel S1 in Fig. 1) übereinstimmt. Mit Hilfe bekannter Befestigungsmittel ist die jeweilige Baueinheit am Fahrzeugrad befestigt. Wie die Fig. 7 zeigt, sind die beiden Lichtstrahlen der Lichtstrahlquelle 7 bei den beiden Baueinheiten 23 und 24 für die Vorderräder rückwärts auf den jeweiligen Drehspiegel 4 bzw. 4' der Baueinheiten 25 und 26 an den beiden Hinterrädern HR1, HR2 gerichtet. Die beiden Emitter bzw. Strahlen der zweiten Lichtstrahlquelle 7 bzw. 7' der Baueinheiten 25 und 26, welche den beiden Hinterrädern zugeordnet sind, sind auf die jeweiligen feststehenden Spiegel 10, die zu den Baueinheiten 25 und 26 gehören, nach rückwärts gerichtet. Die beiden feststehenden Spiegel 10 der Baueinheiten 25 und 26 befinden sich, in Längsrichtung des Fahrzeugs gesehen, hinter den Achsen der Hinterräder HR1 und HR2.

Die beiden Lichtstrahlen, welche von den zwei Emittern bzw. Reflektoren der zweiten Lichtstrahlquelle 7 bzw. 7' in den Baueinheiten 23 und 24 der Vorderräder VR1, VR2 nach vorne gerichtet werden, sind auf die beiden feststehenden Spiegel 10 in den Baueinheiten 23 und 24 gerichtet. Die von den beiden Emittern bzw. Reflektoren der zweiten Lichtstrahlquelle 7 bzw. 7' der Baueinheiten 25 und 26, welche an den Hinterrädern vorgesehen sind, ausgesendeten Strahlen sind in Richtung auf die Drehspiegel 4 bzw. 4' der an den Vorderrädern VR1, VR2 vorgesehenen Baueinheiten 23 und 24 gerichtet. Die von den jeweiligen zweiten Lichtstrahlquellen 7 bzw. 7' sowie 8, 8' kommenden Lichtstrahlen werden von den feststehenden Spiegeln 10 zum jeweils gegenüberliegenden, feststehenden Spiegel 10 reflektiert. Von dort werden die Lichtstrahlen zu den jeweiligen Drehspiegeln 4, 4', die, wie im einzelnen erläutert wurde, sich in der Verlängerung der jeweiligen Radachsen befinden, weitergeleitet. Die Drehspiegel 4, 4' lassen diese Lichtstrahlen zu gegebenen Zeitpunkten zu dem Lichtempfänger 1, 1'durch, so daß, wie oben beschrieben, die gewünschte Winkelmessung durchgeführt werden kann.

Auf diese Weise ist es möglich, mit Hilfe der in der Fig. 7 dargestellten vier Baueinheiten 23, 24, 25 und 26, welche die Sensoranordnungen für die vier Fahrzeugräder bilden, in der horizontalen Ebene auf der Grundlage herkömmlicher trigonometrischer Beziehungen alle für die Radstellungsmessung erforderlichen Winkel zu berechnen. Insbesondere können berechnet werden die Spurwinkel der Vorderräder in Bezug auf die Fahrachse F (Winkelhalbierende der Hinterradgesamtspur, in Fig. 7 strichpunktierte Linie) oder auch in Bezug auf die Fahrzeugmittellinie M (durchgezogene Linie in Fig. 7).

In der Fig. 8 sind schematisch die Winkel und Abmessungen angegeben, welche mit Hilfe der in Fig. 7 dargestellten Meßanordnung gemessen werden können. Mit SOLF ist der Scheitelpunkt der beiden gemessenen Winkel aLF und bLF bezeichnet. Mit SOLR ist der Scheitelpunkt der beiden gemessenen Winkel aLR und bLR bezeichnet. Mit SORR ist der Scheitelpunkt der beiden Winkel aRR und bRR bezeichnet. Mit SORF ist der Scheitelpunkt der beiden gemessenen Winkel aRF und bRF bezeichnet.

Mit SOLF' ist das durch den dem linken Vorderrad zugeordneten feststehenden Spiegel 10 vermittelte Bild des Scheitelpunktes SOLF bezeichnet. Mit SOLR' ist das Bild des Scheitelpunktes SOLR, das durch den dem linken Hinterrad zugeordneten feststehenden Spiegel 10 vermittelt wird, bezeichnet. Mit SORR' ist der Bildpunkt des Scheitelpunktes SORR bezeichnet, der durch den dem rechten Hinterrad zugeordneten feststehenden Spiegel 10 vermittelt wird. Mit SORF' ist der Bildpunkt des Scheitelpunktes SORF bezeichnet, der durch den dem rechten Vorderrad zugeordneten Spiegel 10 vermittelt wird. Die Winkelstellung c der jeweiligen Spiegel 10 (siehe hierzu auch Figuren 1 und 2) sind in der jeweiligen Baueinheit 23 bis 26 festgelegt. Die Relativstellungen der vier in den Baueinheiten 23 bis 26 feststehenden Spiegel 10 zueinander hängen ab von den Relativstellungen der einzelnen Radachsen zueinander.

Aus den gemessenen Winkeln der Figur 8 lassen sich die in Fig. 9 dargestellten Winkel aufgrund folgender Beziehungen mit Hilfe eines Rechners ermitteln:

**LFF = 90° - bLF**

**RFF = 90° - bRF**

**LFR = 90° - aLF**

**RFR = 90° - aRF**

**LRF = aLR - 90°**

**RRF = aRR - 90°**

**LRR = bLR - 90°**

**RRR = bRR - 90°**

Hieraus lassen sich aufgrund bekannter trigonometrischer Beziehungen die einzelnen für die Charakterisierung der Radstellungen erforderlichen Winkel bestimmen. Diese Winkel sind in Fig. 10 dargestellt. Hierin bedeuten:

| | |
|---|---|
| **LFT** | die Spur des linken Vorderrades |
| **RFT** | die Spur des rechten Vorderrades |
| **TFT** | die Gesamtspur der beiden Vorderräder |
| **LF$\beta$S** | den Einschlagwinkel des linken Vorderrades |
| **RF$\beta$S** | den Einschlagwinkel des rechten Vorderrades |
| **FSB** | den Radversatz der Vorderräder |
| **RSB** | den Radversatz der Hinterräder |
| **LRT** | die Einzelspur des linken Hinterrades |
| **RRT** | die Einzelspur des rechten Hinterrades |
| **TRT** | die Gesamtspur der Hinterräder |
| **LR$\beta$S** | den Einschlagwinkel des linken Hinterrades |
| **RR$\beta$S** | den Einschlagwinkel des rechten Hinterrades |
| **ROS** | die Winkelabweichung (Dackelwinkel) der geometrischen Fahrachse F von der Fahrzeugmittellinie M. |

Ferner ist es möglich, den durch Betätigung des Lenkrades eingestellten Lenkwinkel bis zu einem maximalen Lenkanschlagwinkel zu messen.

Einzelspur und Gesamtspur sowohl an den Vorderrädern als auch an den Hinterrädern und Spurdifferenzwinkel können, wie schon erläutert, in Bezug auf die Fahrzeugmittellinie M sowie in Bezug auf die Fahrachse F bestimmt werden. Auch im Hinblick auf andere Bezugsachsen und Bezugspunkte am Fahrzeug, die von den Fahrzeugherstellern angegeben werden, lassen sich die entsprechenden Radstellungen in der Horizontalebene bestimmen. Auch der Unterschied zwischen Fahrachse F und Fahrzeugmittellinie M kann gemessen werden. Ferner kann der Radversatz FSB und RSB zwischen linkem und rechtem Rad sowohl bei den Vorderrädern als auch bei den Hinterrädern bestimmt werden. Auch können die Radabstände FWT und RWT bei den Vorder- und Hinterrädern bestimmt werden. Ferner können die Radabstände RWB und und LWB der linken und rechten Räder in Fahrzeuglängsrichtung und ihre Differenz bestimmt werden. Dies wird anhand der Fig. 11 noch näher erläutert.

Die in der Fig. 11 gezeigte schematische Darsstellung erläutert die Messung des Radversatzes FSB$\ell$ in metrischen Maßeinheiten bei den Vorderrädern. In gleicher Weise kann auch der Radversatz RSB$\ell$ bei den Hinterrädern gemessen werden.

Wie aus Fig. 11 zu ersehen ist, lassen sich weitere Parameter ermitteln. Beispielsweise können die Winkel d und e nach folgenden Beziehungen ermittelt werden.

$$d = \frac{(tB1 - tA1) \times 360^{\circ}}{tR}$$

$$e = \frac{(tB2 - tA2) \times 360^{\circ}}{tR}$$

Aus dem Winkel d und dem oben erläuterten Winkel LFF läßt sich der Abstand FRD ermitteln, da der Abstand ED der beiden Emitter A1 und B1 bekannt ist. In der Fig. 11 bedeuten A1' und B1' die virtuellen Bilder dieser beiden Emitter, welche vom feststehenden Spiegel 10 erzeugt werden.

Ferner läßt sich der Mittenabstand der beiden Vorderräder FWT ermitteln. Dieser Abstand ergibt sich aus dem Abstand FRD, dem Radversetzungswinkel FSB, dem Abstand UL zwischen dem feststehenden Spiegel 10 und dem im Drehspiegel 4 bzw. 4' liegenden Scheitel SORF des zu messenden Winkels sowie dem Abstand UD dieses Scheitels SORF von der Radmitte und den Einschlagwinkeln der Vorderräder.

Der Abstand RWB der Radmitten der Hinterräder ergibt sich in gleicher Weise aus den beiden Abständen UL und UD, dem Abstand HRD zwischen den beiden virtuellen Bildern der Emitter bzw. auf den Drehspiegeln vorhandenen Scheitelpunkten SOLR' und SORR' (Fig. 8) sowie dem Radversatzwinkel FSB bei den Hinterrädern und den Einschlagwinkeln der Hinterräder.

Darüber hinaus können sowohl für die beiden linken als auch für die beiden rechten Räder - in Fahrzeuglängsrichtung gesehen - die Radabstände LWB und RWB aus den gemessenen senen Winkeln LRF und RRF sowie dem bekannten Abstand UD und den Einschlagwinkeln der Räder gemessen werden. Darüber hinaus kann der Radversatz FSBℓ der Vorderräder und der Radversatz RSBℓ bei den Hinterrädern in metrischen Einheiten gemessen werden. Für FSBℓ benötigt man den Abstand FRD sowie den Winkel FSB sowie die beiden bekannten Abstände UL und UD und ferner die Einschlagwinkel der beiden Vorderräder. Wie oben erläutert, können diese Größen aus der dargestellten Meßanordnung ermittelt werden.

Für den Radversatz RSBℓ der Hinterräder in metrischen Einheiten benötigt man in gleicher Weise den Abstand HRD, den Radversatzwinkel RSB der Hinterräder, die Einschlagwinkel der Hinterräder und die bekannten Abstände UL und UD.

Auf diese Weise erreicht man automatisch, ohne daß von der Bedienungsperson gemessene Werte eingeführt werden müssen, eine genaue Messung der Radstellungen. Darüber hinaus ergibt sich die Möglichkeit, die relativen Abstände FRD und HRD zwischen Emitterbild und Empfängerbild mit Hilfe des Spiegels 10 sowohl vorne als auch hinten zu bestimmen. Hierdurch ist es möglich, den Radversatz FSBℓ bzw. RSBℓ in linearen Größen, d. h. in Längenabmessungen, und somit in der am meisten wichtigen Dimension hierfür, anzugeben.

Für die Lichtstrahlquellen 3, 7 und 8 können Infrarotlichtquellen oder auch Laserstrahlquellen zum Einsatz kommen. Für den Lichtempfänger 1 können Infrarotdiodenempfänger oder auch eine Laserdiode zum Einsatz kommen. Anstelle eines flachen Spiegels für den Drehspiegel 4 kann auch ein Parabolspiegel zum Einsatz kommen. Es können auch andere Spiegelformen verwendet werden, mit denen eine Vergrößerung oder Verkleinerung der Divergenz der Lichtstrahlen erreicht wird.

Für den Motor 5 bzw. 5' kann ein Gleichstrommotor zum Einsatz kommen. Jedoch ist auch ein Mikroschrittmotor von Vorteil, da dieser eine direkte Bestimmung der Winkelposition des Motors erlaubt.

In gleicher Weise wie beim Drehspiegel können auch für die feststehenden Spiegel 10 Parabolspiegel oder anderweitig gekrümmte Spiegel zum Einsatz kommen, mit denen eine Vergrößerung oder Verkleinerung der Divergenz der Lichtstrahlen erreicht wird.

Durch die Einrichtung 9, welche im wesentlichen eine polarisierende Wirkung hat, kann auch eine Multiplikatorfunktion, d. h. eine Vergrößerung oder Verkleinerung der Lichtstrahlendivergenz, vorgesehen sein.

Anstelle der Drehspiegelanordnung kann auch eine andere Blendeneinrichtung zum Einsatz kommen, mit der eine Durchlaßfunktion für die einzelnen Strahlen jeweils nach einer vollen Umdrehung (Vollwinkel bzw. 360°) erreicht wird. Auch hierdurch wird gewährleistet, daß der vom Referenzemitter (Lichtstrahlquelle 3) ausgesendete Strahl und die jeweiligen, von den anderen Lichtquellen ausgesendeten Strahlen in

EP 0 491 208 B1

zeitlichen Abständen, die den Winkelabständen entsprechen, auf den Lichtempfänger 1 auftreffen und außerhalb der Durchlaßfunktion ausgeblendet werden.

**Patentansprüche**

1. Verfahren zum optischen Messen eines Winkels, den Stellungen von Bauteilen, insbesondere Radstellungen an Fahrzeugen, zueinander haben, mit Hilfe von Lichtstrahlen, bei dem
   - entlang einem ersten Schenkel (S1) des zu messenden Winkels ein erster Lichtstrahl in Richtung auf den Scheitelpunkt (S0) des Winkels ausgesendet und von dort in bestimmten Zeitabständen, die jeweils einem Vollwinkel (360°) entsprechen, für eine erste Signalregistrierung in einem ersten Zeitpunkt weitergeleitet wird;
   - entlang einem zweiten Schenkel (S2 bzw. S3) des zu messenden Winkels ein zweiter Lichtstrahl auf den Scheitelpunkt (S0) des Winkels gerichtet wird und von dort in Bezug auf den jeweiligen ersten Zeitpunkt mit einem Zeitunterschied, der dem Winkel zwischen den beiden Strahlrichtungen entspricht, für eine zweite Signalregistrierung in einem zweiten Zeitpunkt weitergeleitet wird; und
   - aus dem Abstand der beiden Signalregistrierungen die Größe des Winkels berechnet wird,
   dadurch **gekennzeichnet,**
   daß die beiden Lichtstrahlen auf eine sich drehende Spiegelfläche (22; 22'), in welcher der Scheitelpunkt (S0) des zu messenden Winkels liegt, gerichtet werden.

2. Verfahren nach Anspruch 1, dadurch gekennzeichnet, daß entlang dem zweiten Schenkel (S2 bzw. S3) des zu messenden Winkels zwei Einzelstrahlen zu beiden Seiten des zweiten Schenkels (S2 bzw. S3) und in der Ebene des zu messenden Winkels auf den Scheitelpunkt (S0) des Winkels gerichtet werden.

3. Verfahren nach Anspruche 1 oder 2, dadurch gekennzeichnet, daß die entlang den beiden Schenkeln (S1 und S2 bzw. S3) des zu messenden Winkels ausgesendeten Lichtstrahlen im rechten Winkel zu der Ebene, in welcher der zu messende Winkel liegt, für die Signalregistrierung abgelenkt werden.

4. Verfahren nach Anspruche 1 oder 2, dadurch gekennzeichnet, daß die entlang den beiden Schenkeln (S1 und S2 bzw. S3) des zu messenden Winkels ausgesendeten Lichtstrahlen parallel zum ersten Schenkel des zu messenden Winkels für die Signal-registrierung abgelenkt werden.

5. Verfahren nach Anspruch 4, dadurch gekennzeichnet, daß der bzw. die entlang dem zweiten Schenkel (S2 bzw. S3) ausgesendete(n) Lichtstrahl(en) durch Reflexion des bzw. der entlang dem ersten Schenkel ausgesendeten Lichtstrahls bzw. Lichtstrahlen erzeugt werden.

6. Vorrichtung zur optischen Messung eines Winkels, den Stellungen von Bauteilen, insbesondere Radstellungen an Fahrzeugen, zueinander bilden, mit
   - einer ersten Lichtstrahlquelle (3) zum Aussenden eines ersten Lichtstrahles, der entlang einem ersten Schenkel (S1) des zu messenden Winkels auf den Scheitelpunkt (SO) des Winkels gerichtet ist;
   - einer zweiten Lichtstrahlquelle (7; 7' und/oder 8; 8') zum Aussenden eines zweiten Lichtstrahls, der entlang eines zweiten Schenkels (S2 bzw. S3) des zu messenden Winkels auf den Scheitelpunkt (S0) des Winkels gerichtet ist;
   - einer im Scheitelpunkt des Winkels (S0) vorgesehen Blendeneinrichtung (4, 5, 6; 4', 5'), welche zumindest in der Ebene des zu messenden Winkels mit einem schmalen Durchlaßbereich für das von den jeweiligen Lichtquellen (3, 7, 8; 7', 8') ausgesendete Licht einen Vollwinkel (360°) überstreicht;
   - einem Lichtempfänger (1), der im Strahlengang des durch den Durchlaßbereich der Blendeneinrichtung (4, 5, 6; 4', 5,) hindurchgetretenen Lichts angeordnet ist;
   - einer an den Lichtempfänger (1; 1') angeschlossenen Signalregistriereinrichtung (13, 14), welche jeweilige, vom Lichtempfänger (1; 1') abgegebene Ausgangssignale registriert; und
   - einer an die Signalregistiereinrichtung (13, 14) angeschlossenen Rechnereinrichtung (17, 18, 19), welche aus dem Registrierabstand der in der Signalregistriereinrichtung registrierten Signale den Winkelabstand zwischen den beiden Schenkeln berechnet;
   dadurch **gekennzeichnet,**
   daß die Blendeneinrichtung (4, 5, 6; 4', 5') eine sich drehende Spiegelfläche (22; 22') aufweist, auf

10

welcher der Scheitel (S0) des zu messenden Winkels liegt und welche die jeweiligen, von den Lichtquellen (3, 7, 8; 7', 8') einfallenden Lichtstrahlen in Richtung auf den Lichtempfänger (1; 1') in der Winkellage des Durchlaßbereiches der Blendeneinrichtung (4, 5, 6; 4', 5,) reflektiert.

7. Vorrichtung nach Anspruch 6, dadurch gekennzeichnet, daß die erste Lichtstrahlquelle (3) einen einzelnen Lichtstrahl aussendet, dessen Achse mit dem ersten Schenkel (S1) des zu messenden Winkels zusammenfällt, und die zweite Lichtstrahlquelle (7; 7') und/oder (8; 8') in zwei Einzellichtstrahlquellen (A1, B1) bzw. (A2, B2) aufgeteilt ist, die zwei Lichtstrahlen aussenden, welche im Scheitel (S0) des zu messenden Winkels sich treffen, wobei die beiden Lichtstrahlen in der Ebene des zu messenden Winkels und beidseitig des zweiten Schenkels (S2 bzw. S3) des zu messenden Winkels liegen.

8. Vorrichtung nach Anspruch 6, dadurch gekennzeichnet, daß die sich drehende Spiegelfläche (22) gegenüber ihrer Drehachse (D) einen Winkel von 45° aufweist und die Drehachse (D) im rechten Winkel gegenüber der Ebene verläuft, in welcher der zu messende Winkel (a) und/oder (b) liegt.

9. Vorrichtung nach Anspruch 6, dadurch gekennzeichnet, daß die sich drehende Spiegelfläche (22') im rechten Winkel zu der Ebene, in welcher der zu messende Winkel (a) und/oder (b) liegt, sich erstreckt und die Drehachse (D') in der reflektierenden Fläche (22') liegt.

10. Vorrichtung nach Anspruch 6 oder 8, dadurch gekennzeichnet, daß der Lichtempfänger (1) in der Drehachse (D) der sich drehenden Spiegelfläche (22) liegt.

11. Vorrichtung nach einem der Ansprüche 6, 7 und 9, dadurch gekennzeichnet, daß der Lichtempfänger (1') in seiner Empfangsrichtung parallel zum ersten Schenkel (S1) des zu messenden Winkels (a) bzw. (b) ausgerichtet ist.

12. Vorrichtung nach Anspruch 6 oder 7, dadurch gekennzeichnet, daß die zweite Lichtstrahlquelle (7') bzw. (8') als Reflektor des von der ersten Lichtstrahlquelle (3) ausgesendeten Lichtstrahls ausgebildet ist.

13. Vorrichtung nach einem der Ansprüche 6 bis 12, dadurch gekennzeichnet, daß zur Messung von Radstellungen an Fahrzeugen, insbesondere Kraftfahrzeugen, zugeordnet zu jedem Fahrzeugrad
    - in der Verlängerung der jeweiligen Radachse (RA) die erste Lichtquelle (3) liegt, welche den ersten Lichtstrahl längs der Verlängerung der Radachse, die den ersten Schenkel (S1) des zu messenden Winkels (a und/oder b) bildet, aussendet, und ferner die sich drehende Spiegelfläche (22; 22') liegt;
    - die zweiten Lichtquellen (7; 7' und 8; 8') so vorgesehen sind, daß die eine Lichtquelle (7; 7') bezüglich der Fahrzeuglängsrichtung ihren Lichtstrahl rückwärts und die andere Lichtquelle (8; 8') ihren Lichtstrahl vorwärts richten; und
    - ferner ein feststehender Spiegel (10) vorgesehen ist, der bei einem jeweiligen Vorderrad (VR1, VR2) von der vorwärts gerichteten Lichtquelle (8; 8') und bei einem jeweiligen Hinterrad (HR1, HR2) von der rückwärts gerichteten Lichtquelle (7; 7') angestrahlt ist.

14. Vorrichtung nach Anspruch 13, dadurch gekennzeichnet, daß die Flächennormale (N) des feststehenden Spiegels (10) gegenüber dem zweiten Schenkel (S2 bzw. S3) des zu messenden Winkels (a bzw. b) einen Winkel von 45° aufweist.

15. Vorrichtung nach Anspruch 13 oder 14, dadurch gekennzeichnet, daß die erste Lichtquelle (3) die beiden Lichtquellen (7; 7' und 8; 8'), die Blendeneinrichtung (4, 5, 6; 4', 5') und der feststehende Spiegel (10) eine an ein jeweiliges Fahrzeugrad montierbare Baueinheit (23 - 26) bildet.

16. Vorrichtung nach Anspruch 15, dadurch gekennzeichnet, daß die Baueinheit (23 - 26) ferner den Lichtempfänger (1; 1') aufweist.

**Claims**

1. A method of optically measuring an angle between positions of components, in particular wheel positions on motor vehicles, by means of light beams, wherein :

- a first light beam is emitted along a first side (S1) of the angle to be measured in a direction towards the apex (S0) of the angle and from there passed on at given intervals of time which each correspond to a full angle (360°) for a first signal registration at a first moment in time;
- a second light beam is emitted along the second side (S2 or S3) of the angle to be measured towards the apex (S0) of the angle and from there is passed on relative to the first moment in time with a time difference which corresponds to the angle between the two beam directions, for a second signal registration at a second moment in time; and
- the magnitude of the angle is calculated from the spacing between the two signal registrations, characterised in that the two light beams are directed onto a rotating mirror surface (22; 22') in which the apex (S0) of the angle to be measured is disposed.

2.  A method according to claim 1 characterised in that two individual beams are directed along the second side (S2 or S3) of the angle to be measured at both sides of the second side (S2 or S3) and in the plane of the angle to be measured onto the apex point (S0) of the angle.

3.  A method according to claim 1 or claim 2 characterised in that the light beams which are emitted along the two sides (S1 and S2 or S3) of the angle to be measured are deflected at a right angle to the plane in which the angle to be measured lies, for signal registration.

4.  A method according to claim 1 or claim 2 characterised in that the light beams which are emitted along the two sides (S1 and S2 or S3) of the angle to be measured are deflected parallel to the first side of the angle to be measured, for signal registration.

5.  A method according to claim 4 characterised in that the light beam or beams which is or are emitted along the second side (S2 or S3) are produced by reflection of the light beam or beams emitted along the first side.

6.  Apparatus for the optical measurement of an angle between positions of components, in particular wheel positions on motor vehicles, comprising :
    - a first light beam source (3) for emitting a first light beam which is directed along a first side (S1) of the angle to be measured onto the apex point (S0) of the angle;
    - a second light beam source (7; 7' and/or 8; 8') for emitting a second light beam which is directed along a second side (S2 or S3) of the angle to be measured, onto the apex point (S0) of the angle;
    - an aperture means (4, 5, 6; 4', 5') which is disposed at the apex point of the angle (S0) and which, at least in the plane of the angle to be measured, passes over a full angle (360°) with a narrow transmission region for the light emitted by the respective light sources (3, 7, 8; 7', 8');
    - a light receiver (1) which is arranged in the beam path of the light which has passed through the transmission region of the aperture means (4, 5, 6; 4', 5');
    - a signal registering means (13, 14) which is connected to the light receiver (1; 1') and which registers respective output signals produced by the light receiver (1; 1'); and
    - a calculating means (17, 18, 19) which is connected to the signal registering means (13, 14) and which calculates the angular spacing between the two sides from the registration spacing in respect of the signals registered in the signal registering means;
    characterised in that the aperture means (4, 5, 6; 4', 5') has a rotating mirror surface (22; 22') on which the apex (S0) of the angle to be measured is disposed and which reflects the respective light beams incident from the light sources (3, 7, 8; 7', 8') in a direction towards the light receiver (1; 1') in the angular position of the transmission region of the aperture means (4, 5, 6; 4', 5').

7.  Apparatus according to claim 6 characterised in that the first light beam source (3) emits an individual light beam whose axis coincides with the first side (S1) of the angle to be measured and the second light beam source (7; 7') and/or (8; 8') is divided into two individual light beam sources (A1, B1) and (A2, B2) respectively, which emit two light beams which meet at the apex (S0) of the angle to be measured, wherein the two light beams lie in the plane of the angle to be measured and on both sides of the second side (S2 or S3) of the angle to be measured.

**8.** Apparatus according to claim 6 characterised in that the rotating mirror surface (22) is at an angle of 45° relative to its axis of rotation (D) and the axis of rotation (D) extends at a right angle relative to the plane in which the angle (a) and/or (b) to be measured lies.

**9.** Apparatus according to claim 6 characterised in that the rotating mirror surface (22') extends at a right angle to the plane in which the angle (a) and/or (b) to be measured lies and the axis of rotation (D') lies in the reflecting surface (22').

**10.** Apparatus according to claim 6 or claim 8 characterised in that the light receiver (1) lies in the axis of rotation (D) of the rotating mirror surface (22).

**11.** Apparatus according to one of claims 6, 7 and 9 characterised in that the light receiver (1') is oriented in its receiving direction parallel to the first side (S1) of the angle (a) or (b) to be measured.

**12.** Apparatus according to claim 6 or claim 7 characterised in that the second light beam source (7') or (8') is in the form of a reflector for the light beam emitted by the first light source (3).

**13.** Apparatus according to one of claims 6 to 12 characterised in that, for measuring wheel positions on vehicles, in particular motor vehicles, associated with each vehicle wheel :
- disposed in line with the respective wheel axle (RA) are the first light source (3) which emits the first light beam along the line extending the wheel axle, which forms the first side (S1) of the angle (a and/or b) to be measured, and also the rotating mirror surface (22; 22');
- the second light sources (7; 7' and 8; 8') are so provided that the one light source (7; 7') directs its light beam rearwardly with respect to the longitudinal direction of the vehicle and the other light source (8; 8') directs its light beam forwardly with respect to the longitudinal direction of the vehicle; and
- there is also provided a stationary mirror (10) which in relation to a respective front wheel (VR1, VR2) receives light from the forwardly directed light source (8; 8') and in relation to a respective rear wheel (HR1, HR2) receives light from the rearwardly directed light source (7; 7').

**14.** Apparatus according to claim 13 characterised in that the line (N) normal to the surface of the stationary mirror (10) is at an angle of 45° relative to the second side (S2 or S3) of the angle (a or b) to be measured.

**15.** Apparatus according to claim 13 or claim 14 characterised in that the first light source (3), the two light sources (7; 7' and 8; 8'), the aperture means (4, 5, 6; 4', 5') and the stationary mirror (10) form a structural unit (23 - 26) which can be mounted to a respective vehicle wheel.

**16.** Apparatus according to claim 15 characterised in that the structural unit (23 - 26) also has the light receiver (1; 1').

**Revendications**

**1.** Procédé de mesure optique de l'angle, que font entre elles des positions de structure, notamment des positions de roues de véhicules, à l'aide de faisceaux de lumière, dans lequel
- un premier faisceau de lumière est émis, le long d'un premier côté (S1) de l'angle à mesurer, en direction du sommet (S0) de l'angle et, de là, est retransmis, pendant des intervalles de temps déterminés qui correspondent respectivement à un angle total (360°), pour un premier enregistrement de signal à un premier instant;
- un second faisceau de lumière est dirigé, le long d'un second côté (S2 ou S3) de l'angle à mesurer, en direction du sommet (S0) de l'angle et, de là, est retransmis avec, par rapport au premier instant respectif, une différence de temps qui correspond à l'angle entre les deux directions des faisceaux, pour un second enregistrement de signal à un second instant; et
- la valeur de l'angle est calculée à partir de la distance entre les deux enregistrements de signaux, caractérisé par le fait qu'on dirige les deux faisceaux de lumière sur une surface de miroir tournante (22;22'), sur laquelle est situé le sommet (S0) de l'angle à mesurer.

2. Procédé suivant la revendication 1, caractérisé par le fait qu'on dirige deux faisceaux individuels, le long du second côté (S2 ou S3) de l'angle à mesurer, de part et d'autre de ce second côté (S2 ou S3) et dans le plan de l'angle à mesurer, en direction du sommet (S0) de l'angle.

3. Procédé suivant la revendication 1 ou 2, caractérisé par le fait que les faisceaux de lumière, qui sont émis le long des deux côtés (S1 et S2 ou S3) de l'angle à mesurer sont, pour l'enregistrement du signal, déviés perpendiculairement au plan de l'angle à mesurer,

4. Procédé suivant la revendication 1 ou 2, caractérisé par le fait que les faisceaux de lumière, qui sont émis le long des deux côtés (S1 et S2 ou S3) de l'angle à mesurer sont pour l'enregistrement du signal, déviés parallèlement au premier côté de l'angle à mesurer,

5. Procédé suivant la revendication 4, caractérisé par le fait que le ou les faisceaux de lumière émis le long du second côté (S2 ou S3) sont produits par réflexion du ou des faisceaux de lumière émis le long du premier côté.

6. Dispositif de mesure optique d'un angle, que font entre elles des positions de structures, notamment des positions de roues de véhicules, comportant
   - une première source de faisceau de lumière (3) pour l'émission d'un premier faisceau de lumière, qui est dirigé le long d'un premier côté (S1) de l'angle à mesurer, en direction du sommet (S0) de cet angle;
   - une seconde source de faisceau de lumière (7;7' et/ou 8; 8') pour l'émission d'un second faisceau de lumière, qui est dirigé, le long d'un second côté (S2 ou S3) de l'angle à mesurer, sur le sommet (S0) de l'angle;
   - un dispositif à diaphragme (4,5,6; 4',5'), qui est prévu au sommet de l'angle (S0) et qui, avec une étroite zone de transmission pour la lumière émise par les sources de lumière respectives (3,7,8; 7',8') couvre un angle total (360°), au moins dans le plan de l'angle à mesurer;
   - un récepteur de lumière (1), qui est disposé dans le trajet du faisceau de la lumière traversant la zone de transmission du dispositif à diaphragme (4,5,6; 4',5');
   - un dispositif d'enregistrement de signaux (13,14), qui est raccordé au récepteur de lumière (1;1') et qui enregistre des signaux de sortie fournis par le récepteur de lumière (1;1'); et
   - un dispositif de calcul (17,18,19), qui est raccordé au dispositif d'enregistrement de signaux (13,14) et qui calcule, à partir de la distance d'enregistrement des signaux enregistrés dans le dispositif d'enregistrement de signaux, la distance angulaire entre les deux côtés
   caractérisé par le fait
   que le dispositif à diaphragme (4,5,6; 4',5') a une surface réfléchissante tournante (22;22'), sur laquelle est situé le sommet (S0) de l'angle à mesurer et qui dans la position angulaire de la zone de transmission du dispositif à diaphragme (4,5,6; 4',5'), refléchit les faisceaux de lumière incidents, qui arrivent des sources de lumière (3,7,8; 7',8'), en direction du récepteur de lumière (1 ;1').

7. Dispositif suivant la revendication 6, caractérisé par le fait que la première source (3) de faisceau de lumière émet un seul faisceau de lumière, dont l'axe coïncide avec le premier côté (S1) de l'angle à mesurer, et que la seconde source (7;7' et/ou 8,8') d'émission de faisceaux de lumière est divisée en deux sources de faisceaux de lumière individuels (A1,B1) ou (A2,82), qui émettent deux faisceaux de lumière, qui se rencontrent au sommet (S0) de l'angle à mesurer, les deux faisceaux de lumière étant dans le plan de l'angle à mesurer et de part et d'autre du second côté (S2 ou S3) de l'angle à mesurer.

8. Dispositif suivant la revendication 6, caractérisé par le fait que la surface de miroir tournante (22) fait, avec son axe de rotation (D), un angle de 45° et que l'axe de rotation (D) est perpendiculaire au plan de l'angle à mesurer (a) et/ou (b).

9. Dispositif suivant la revendication 6, caractérisé par le fait que la surface de miroir tournante (22') est perpendiculaire au plan de l'angle à mesurer (a) et/ou (b) et que l'axe de rotation (D') est situé dans la surface réfléchissante (22').

10. Dispositif suivant la revendication 6 ou 8, caractérisé par le fait que le récepteur de lumière (1) est sur l'axe de rotation (D) de la surface de miroir tournante (22).

**11.** Dispositif suivant l'une des revendications 6, 7 et 9, caractérisé par le fait que la direction de réception du récepteur de lumière (1') est parallèle à la première branche (S1) de l'angle à mesurer (a) ou (b).

**12.** Dispositif suivant la revendication 6 ou 7, caractérisé par le fait que la seconde source de faisceaux de lumière (7' et 8') est agencée sous la forme d'un réflecteur du faisceau de lumière émis par la première source (3) d'émission de faisceau de lumière.

**13.** Dispositif suivant l'une des revendications 6 à 12, caractérisé par le fait que pour mesurer des positions de roues de véhicules, notamment de véhicules automobiles, pour chaque roue du véhicule il est prévu
  - dans le prolongement de l'axe (RA) de la roue, la première source de lumière (3), qui émet le premier faisceau de lumière le long du prolongement de l'axe de la roue, qui forme le premier côté (S1) de l'angle à mesurer (a et/ou b), et en outre la surface de miroir tournante (22;22');
  - les secondes sources de lumière (7;7' et 8;8') prévues de telle sorte que le faisceau de lumière d'une première source de lumière (7;7') est dirigé vers l'arrière et le faisceau de lumière de l'autre source de lumière (8;8') est dirigé vers l'avant, par rapport à la direction longitudinale du véhicule; et
  - en outre il est prévu un miroir fixe (10), qui, pour une roue avant (VR1,VR2), est éclairé par la source de lumière (8;8') dirigée vers l'avant et, pour une roue arrière (HR1,HR2), est éclairé par la source de lumière (7;7') dirigée vers l'arrière.

**14.** Dispositif suivant la revendication 13, caractérisé par le fait que la normale (N) à la surface du miroir fixe (10) fait un angle de 45° avec le second côté (S2 ou S3) de l'angle à mesurer (a ou b).

**15.** Dispositif suivant la revendication 13 ou 14, caractérisé par le fait que la première source de lumière (3) forme les deux sources de lumière (7;7' et 8;8'), et que le dispositif à diaphragme (4,5,6; 4',5') et le miroir fixe (10) forment une unité de construction (23 à 26) pouvant être montée sur une roue d'un véhicule.

**16.** Dispositif suivant la revendication 15, caractérisé par le fait que l'unité de construction (23 à 26) comporte en outre le récepteur de lumière (1;1').

FIG. 1

FIG. 2

FIG. 3

FIG. 4

FIG. 5

FIG. 6

# FIG. 7

FIG. 8

# FIG. 9

FIG. 10

FIG. 11